## Europäisches Patentamt

## European Patent Office

## Office européen des brevets

(11) Veröffentlichungsnummer: **0 456 905 A2**

# EUROPÄISCHE PATENTANMELDUNG

(21) Anmeldenummer: **90124423.6**

(51) Int. Cl.⁵: **H04N 5/92**

(22) Anmeldetag: **17.12.90**

(30) Priorität: **14.05.90 DE 4015391**

(43) Veröffentlichungstag der Anmeldung:
**21.11.91 Patentblatt 91/47**

(84) Benannte Vertragsstaaten:
**AT BE CH DE DK ES FR GB GR IT LI LU NL SE**

(71) Anmelder: **Nokia Unterhaltungselektronik**

**(Deutschland) GmbH**
**Östliche Karl-Friedrich-Strasse 132**
**W-7530 Pforzheim(DE)**

(72) Erfinder: **Reime, Gerd**
**Friedenstrasse 88**
**W-7542 Schömberg 2(DE)**

(54) **Videorecorder für HDTV-Signale.**

(57) Ein Videorecorder zum Aufzeichnen und Wiedergeben insbesondere von HDTV-Signalen verfügt über folgende Funktionsgruppen:
- eine Aufzeichnungssignal-Verarbeitungseinrichtung mit folgenden Funktionsmitteln:
  -- einer ersten Abtasteinrichtung zum Abtasten des aufzuzeichnenden Signals mit Abtastimpulsen einer ersten Abtastfrequenz, die wenigstens gleich der genannten Übertragungsgrenzfrequenz ist, und zum Ausgeben des bei der Abtastung erzeugten Ausgangssignals als erstes Aufzeichnungssignal,
  -- und einer zweiten Abtasteinrichtung zum Abtasten des aufzuzeichnenden Signals mit Abtastpulsen, die gegenüber denen in der ersten Abtasteinrichtung um eine halbe Periode verschoben sind und deren Abtastfrequenz gleich der ersten Abtastfrequenz ist, und zum Ausgeben des bei der Abtastung erzeugten Ausgangssignals als zweites Aufzeichnungssignal,
- eine Aufzeichnungseinrichtung zum Aufzeichnen der zwei Aufzeichnungssignale in zwei benachbarten Spuren auf einem Magnetband mittels zweier eng benachbarter Schreibköpfe,
- eine Wiedergabeeinrichtung zum Lesen der zwei in jeweils benachbarten Spuren aufgezeichneten Aufzeichnungssignale mittels zweier eng benachbarter Leseköpfe und zum Ausgeben der gelesenen Aufzeichnungssignale als Lesesignale
- und eine Wiedergabesignal-Erzeugungseinrichtung mit einer Wiedergabe-Abtasteinrichtung zum abwechselnd aufeinanderfolgenden Abtasten der beiden Lesesignale mit Abtastpulsen, deren Abtastpulsfolge gleich dem doppelten Betrag der ersten Abtastfrequenz ist, und zum Ausgeben der bei der Abtastung erzeugten Ausgangssignale als Wiedergabesignale.

Fig. 1

## Technisches Gebiet

Die Erfindung betrifft einen Videorecorder mit verdoppelter Aufzeichnungsbandbreite, insbesondere zum Aufzeichnen und Wiedergeben von HDTV-Signalen, also zum Aufzeichnen und Wiedergeben von Signalen mit einer 12MHz-Frequenzgrenze mittels einer Aufzeichnungs-/ Wiedergabe-Einrichtung mit 6MHz Grenzfrequenz.

## Stand der Technik

Mit derzeit üblichen Bandlaufgeschwindigkeiten ist es unter Verwendung hochwertiger Bänder und Schreib-Leseköpfen mit sehr feinen Kopfspalten möglich, Videosignale mit 6MHz Frequenzgrenze durch einen Videorecorder in Heim- oder semiprofessioneller Ausführung aufzuzeichnen. Sollen nun HDTV-Signale mit der heutigen machbaren Technologie und den üblichen Bandgeschwindigkeiten mit Heim- oder semiprofessionellen Geräten aufgezeichnet werden, führt dies offensichtlich zu Problemen, da HDTV-Signale eine Übertragungsbandbreite mit einer Übertragungsgrenzfrequenz von 12MHz aufweisen.

Bei einem aus der DE-Zeitschrift "Funkschau Spezial" vom 25. August 1989, Seite 44 bis 48 bekannten Videorecorder zum Aufzeichnen und Wiedergeben von HDTV-Signalen wird das Eingangssignal von 12MHz Bandbreite mit einer Taktrate von 27MHz abgetastet und zeilenweise auf zwei parallele Kanäle aufgeteilt und in je einen Digitalspeicher jedes Kanales eingespeichert. Mittels dieser Speicher erfolgt dann eine Dehnung dieser Signalpakete auf etwa die doppelte Zeitdauer, wodurch die Bandbreite dieser Signalpakete halbiert wird. Die beiden aus den beiden Signalpaketen entstandenen Aufzeichnungssignale mit je 6MHz Übertragungsbandbreite werden nach einer Rückwandlung in ein Analogsignal und einer Frequenzmodulation von einer Aufzeichnungseinrichtung mit zwei eng benachbarten Schreib-Leseköpfen in zwei benachbarten Spuren auf einem Magnetband aufgezeichnet.

Wiedergabeseitig werden bei dem bekannten Videorecorder die in jeweils zwei benachbarten Spuren aufgezeichneten Aufzeichnungssignale mit den zwei eng benachbarten Schreib-Leseköpfen gelesen. Die so erhaltenen Lesesignale mit je 6MHz Bandbreite und 64 $\mu_s$ Dauer pro Signalpaket werden nach einer FM-Demodulation und einer A/D-Wandlung wiederum digital gespeichert und in den Speichern der beiden Kanäle zeitlich komprimiert, um anschließend die komprimierten Signalpakete zu einem Wiedergabe-Videosignal von 12MHz Bandbreite zu verschachteln. Beim Verschachteln der einzelen Signalpakete ist auf einen glatten Übergang der Signalpakete an der Zusammensetzstelle zu achten.

Es ist offensichtlich, daß das bekannte Verfahren sehr schaltungsaufwendig ist und daß zusätliche Probleme durch das Erfordernis des phasenrichtigen Aneinanderfügens der einzelnen Signalpakete bestehen.

Demgemäß besteht unverändert das Problem, einen Videorecorder zum Aufzeichnen und Wiedergeben von breitbandigen Videosignalen, insbesondere von HDTV-Signalen, mit einer Aufzeichnungs-/Wiedergabe-Einrichtung mit 6MHz Grenzfequenz, oder allgemeiner, einen Videorecorder zum Aufzeichnen und Wiedergeben von breitbandigen Videosignalen, deren Grenzfrequenz doppelt so hoch liegt wie die höchste Frequenz der Bandbreite der Aufzeichnungs-/Wiedergabe-Einrichtung, einfach und zuverlässig arbeitend auszugestalten.

## Darstellung der Erfindung

Der erfindungsgemäße Videorecorder mit verdoppelter Aufzeichnungsbandbreite, insbesondere zum Aufzeichnen und Wiedergeben von HDTV-Signalen, weist ausgehend vom Oberbegriff des Anspruches 1 folgende Merkmale auf:
- eine Aufzeichnungssignal-Verarbeitungseinrichtung mit
  -- einer ersten Abtasteinrichtung zum Abtasten des aufzuzeichnenden Signals mit Abtastimpulsen einer ersten Abtastfrequenz, die wenigstens gleich der genannten Übertragungsgrenzfrequenz ist, und zum Ausgeben des bei der Abtastung erzeugten Ausgangssignals als erstes Aufzeichnungssignal,
  -- und einer zweiten Abtasteinrichtung zum Abtasten des aufzuzeichnenden Signals mit Abtastpulsen, die gegenüber denen in der ersten Abtasteinrichtung um eine halbe Periode verschoben sind und deren Abtastfrequenz gleich der ersten Abtastfrequenz ist, und zum Ausgeben des bei der Abtastung erzeugten Ausgangssignals als zweites Aufzeichnungssignal,
- eine Aufzeichnungseinrichtung zum Aufzeichnen der zwei Aufzeichnungssignale in zwei benachbarten Spuren auf einem Magnetband mittels zweier eng benachbarter Schreibköpfe,
- eine Wiedergabeeinrichtung zum Lesen der zwei in jeweils benachbarten Spuren aufgezeichneten Aufzeichnungssignale mittels zweier eng benachbarter Leseköpfe und zum Ausgeben der gelesenen Aufzeichnungssignale als Lesesignale
- und eine Wiedergabesignal-Erzeugungseinrichtung mit einer Wiedergabe-Abtasteinrichtung zum abwechselnd aufeinander folgenden Abtasten der beiden Lesesignale mit Abtastpulsen, deren Abtastpulsfolge gleich dem doppelten Betrag der ersten Abtastfrequenz ist, und zum Ausgeben der bei der Abtastung erzeugten Ausgangssignale als Wiedergabesignale.

Wie ersichtlich, ist hier keinerlei digitale Signalverarbeitung mit Zwischenspeichern von Signalteilpaketen erforderlich, sondern die aufzuzeichnenden Signale werden unmittelbar verarbeitet und aufgezeichnet, ebenso wie die gelesenen Aufzeichnungssignale unmittelbar zum Wiedergabesignal zusammengesetzt werden.

Der erfindungsgemäße Videorecorder ist sehr einfach aufgebaut, da statt umfangreicher digitaler Schaltungsgruppen nur drei Abtasteinrichtungen für das Wandeln der zu übertragenden Videosignale einer Bandbreite mit einer bestimmten oberen Übertragungsgrenzfrequenz in solche einer Übertragungsbandbreite mit der halben genannten oberen Übertragungsgrenzfrequenz und zurück erforderlich sind.

Vorteilhafte Ausgestaltungen und Weiterbildungen der Erfindung sind in den Unteransprüchen angegeben.

Von Vorteil ist es, das Abtasten sowohl aufnahme- wie auch wiedergabeseitig synchron mit vorgegebenen Signalinhalten des Videosignales, z.B. des HDTV-Signales, vorzunehmen. Hierzu weist eine vorteilhafte Weiterbildung eine Eingangs- und eine Ausgangs-Synchronisiersignal-Auswertschaltung auf. Diese Schaltungen detektieren vorgegebene Synchronisiersignale im aufzuzeichnenden bzw. im wiedergewonnenen Signal und synchronisieren mit Hilfe der aufgefundenen Signale einen jeweiligen Oszillator, der Abtastpulse liefert. Vorgegebene Signale, die sich zum Synchronisieren eignen, befinden sich z.B. bei derzeit üblichen HDTV-Signalen im Datenteil.

In einer vorteilhaften Weiterbildung der Erfindung enthalten die aufzeichnungsseitigen und wiedergabeseitigen Abtasteinrichtungen je einen Tiefpass mit je einer Grenzfrequenz, die die halbe Abtastfrequenz der zugehörigen Abtasteinrichtung nicht wesentlich überschreitet. Dadurch wird das der Abtastung entsprechende Ausgangssignal mit hoher Qualität geformt und von störenden Oberwellen befreit.

Figurenbeschreibung

Fig. 1    Schematische Blockschaltdarstellung eines Videorecorders, bei dem ein aufzuzeichnendes HDTV-Signal so abgetastet wird, das zwei Signale mit halbierter Übertragungsgrenzfrequenz und verschobener Phasenlage zur Verfügung stehen und bei dem die aufgezeichneten Signale nach dem Lesen wieder zum HDTV-Signal mit hoher Übertragungsgrenzfrequenz zusammengesetzt werden,

Fig. 2    Darstellung eines sinusförmigen HDTV-Signals mit eingezeichneten Abtastpunkten zum Veranschaulichen der Funktion der Schaltung von Figur 1 und

Fig. 3    ausführlicheres Blockschaltbild für den Videorecorder gemäß Figur 1.

Beschreibung von Ausführungsbeispielen

Im Blockschaltbild wichtiger Funktionsteile eines Videorecorders gelangt ein HDTV-Signal mit 12MHz Grenzfrequenz seines Übertragungsbandes von einem Eingangsanschluß E auf eine erste Abtast-Halteschaltung 10.1 und eine zweite Abtast-Halteschaltung 10.2. Von diesen Schaltungen wird das HDTV-Signal jeweils mit 12MHz abgetastet, weswegen die beiden Schaltungen jeweils ein Ausgangssignal eines Übertragungsbandes mit 6MHz Grenzfrequenz ausgeben, nämlich ein erstes Aufzeichnungssignal AS1 und ein zweites Aufzeichnungssignal AS2. Diese beiden Aufzeichnungssignale gelangen über Frequenzmodulatoren M1 und M2 auf jeweils einen von zwei eng benachbarten Schreib-Leseköpfen 11.1 und 11.2, die die Aufzeichnungssignale in zwei benachbarten Spuren auf einem Magnetband 12 aufzeichnen. Es handelt sich um eine übliche Schrägaufzeichnung mit rotierender Kopftrommel, weswegen das Band 12 der Anschaulichkeit halber etwas schräg verlaufend dargestellt ist. Bei der Darstellung weisen die Schreib-Leseköpfe beinahe die Breite des Bandes auf. Dies entspricht bekannterweise nicht der Realität, dient jedoch der Anschaulichkeit.

Wiedergabeseitig gelangen die aufgezeichneten Signale von den beiden eng benachbarten Schreib-Leseköpfen 11.1 und 11.2 als erstes Lesesignal LS1 und zweites Lesesignal LS2 über Frequenzdemodulatoren DM1 und DM2 zu einer Wiedergabe-Abtastschaltung 13, die mit einer Schaltfrequenz von 24MHz die beiden Lesesignale aufeinanderfolgend abtastet. Durch diese Abtastung mit 24MHz wird das HDTV-Signal mit einer Bandbreite von 12MHz wiedergewonnen. Es steht an einem Ausgangsanschluß A zum Weiterverarbeiten an.

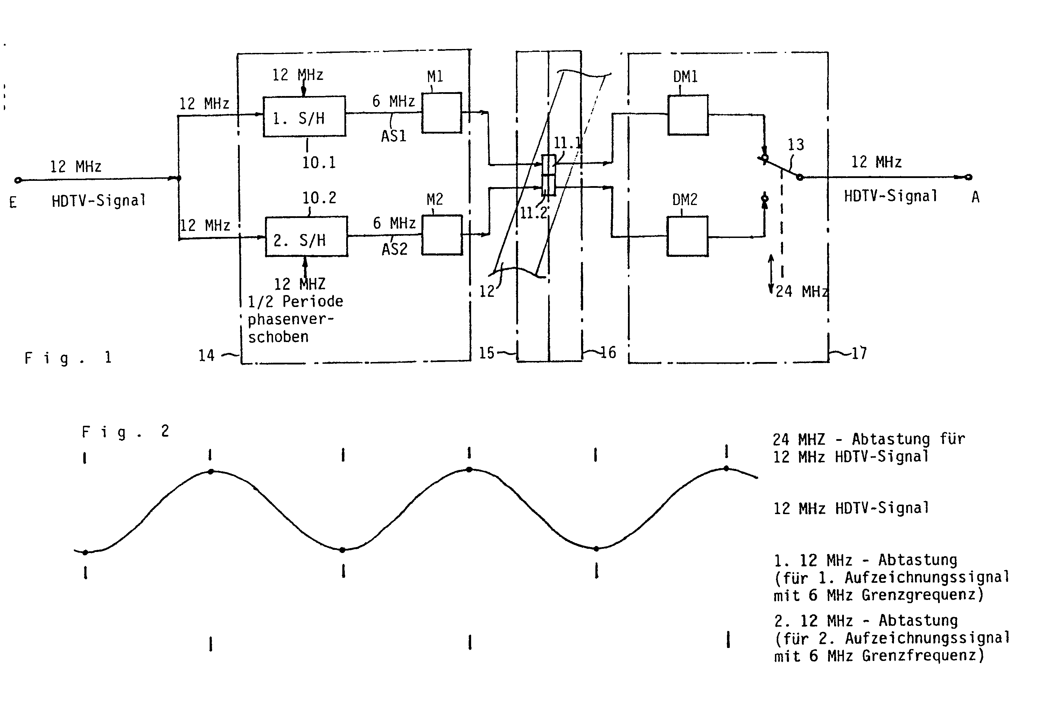

Im Blockschaltbild gemäß Fig. 1 bilden die beiden Abtastschaltungen 10.1 und 10.2 mit den zugehörigen Pulslieferschaltungen eine Aufzeichnungssignal-Verarbeitungseinrichtung 14. Diese gibt die beiden Aufzeichnungssignale AS1 und AS2 auf eine Aufzeichnungseinrichtung 15 mit den beiden Schreib-Leseköpfen 11.1 und 11.2. Weitere Details der Aufzeichnungseinrichtung, wie die Bandführung und die Ansteuerschaltung für die Köpfe sind nicht dargestellt. Entsprechendes gilt für eine Wiedergabeeinrichtung 16, die zum Wiedergeben der aufgezeichneten Signale die Schreib-Leseköpfe 11.1 und 11.2 verwendet. Die von dieser Wiedergabeeinrichtung 16 ausgegebenen Lesesignale LS1 und LS2 werden von einer Wiedergabesignal-Erzeugungseinrichtung 17 verarbeitet, die die Wiedergabe-Abtastschaltung 13 samt zugehöriger Pulslieferschaltung für das Abtasten aufweist.

Die Funktion eines Videorecorders mit den Funktionsgruppen gemäß Fig. 1 wird nun anhand von Fig. 2 erläutert.

Ausgangspunkt für die Darstellung von Fig. 1 ist ein HDTV-Signal, für das der Anschaulichkeit halber ein sinusförmiger Verlauf angenommen ist. Die Frequenz des sinusförmigen Signales betrage 12MHz. Wenn dieses Signal mit seinen Minima und Maxima durch Abtasten richtig erfaßt werden soll, ist eine Abtastung mit 24MHz erforderlich. Abtastpulse mit dieser hohen Frequenz sind in Fig. 2 über dem sinusförmigen Signal eingezeichnet. Abtastung mit dieser hohen Frequenz würde wieder ein Signal mit 12MHz Grenzfrequenz ergeben, was für ein Aufzeichnen mit handelsüblicher Videorecordertechnik und unter Verwendung üblicher Bandgeschwindigkeiten zu hoch wäre. Bei üblichen Bandgeschwindigkeiten sind unter Verwendung hochwertiger Bänder und von Schreib-Leseköpfen mit sehr engen Kopfspalten nur Aufzeichnungsfrequenzen bis 6MHz realisierbar.

Der Videorecorder gemäß Fig.1 nutzt nun die Erkenntnis, daß beim Abtasten eines Signales mit Abtastpulsen von 12MHz Wiederholrate ein Ausgangssignal mit einer Grenzfrequenz von 6MHz erhalten werden kann. Wird eine Abtastung mit zwei Abtastpulsreihen von jeweils 12MHz vorgenommen, bei denen jedoch die Pulse der einen Reihe um eine halbe Periode gegenüber der anderen Pulsreihe verschoben sind, werden insgesamt ebensoviele Punkte eines Eingangssignales abgetastet wie bei einer einzigen Abtastung mit 24MHz. Die Abtastergebnisse sind nun aber in zwei Ausgangssignalen mit jeweils 6MHz Grenzfrequenz enthalten.

In Fig. 2 ist unter dem sinusförmig angenommenen HDTV-Eingangssignal eine erste Folge von Abtastpulsen eingezeichnet. Diese tasten im dargestellten Ausführungsbeispiel das HDTV-Signal jeweils in seinen Minima ab, also mit einer Wiederholrate von 12MHz. Dies führt zum ersten Aufzeichnungssignal AS1 mit einer Grenzfrequenz von 6MHz. Unterhalb dieser ersten Abtastpulsfolge ist eine zweite Pulsfolge eingezeichnet, die gegenüber der ersten um eine halbe Periode verschoben ist, so daß durch sie jeweils die Maxima des HDTV-Signals abgetastet werden. So wird das zweite Aufzeichnungssignal AS2 mit ebenfalls 6MHz Grenzfrequenz erhalten.

Die beiden obengenannten Aufzeichnungssignale werden nach dem Aufzeichnen auf das Band durch den Lesevorgang eines nachfolgenden Wiedergabebetriebes als Lesesignale LS1 und LS2 wiedergewonnen. Dadurch, daß die als Umschalter ausgebildete Wiedergabe-Abtastschaltung 13 mit einer Umschaltfrequenz von 12MHz zwischen diesen beiden Lesesignalen hin- und herschaltet, erfaßt dieser Umschalter sämtliche Punkte, die den ursprünglichen Abtastpunkten des HDTV-Eingangssignales entsprechen, also aufeinanderfolgend jeweils einen Punkt für ein Minimum und ein Maximum. Dadurch wird das HDTV-Signal mit einer Übertragungsbandbreite von 12MHz wiedergewonnen.

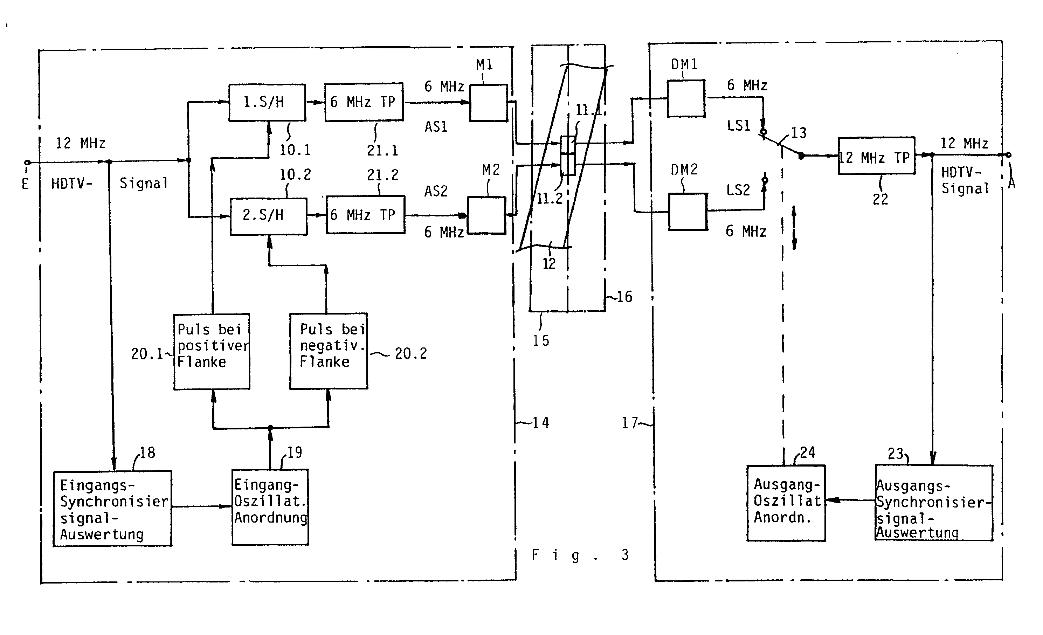

Aus Fig.2 ist erkennbar, daß der größte Signalhub für die beim Abtasten gelesenen Signal dann erhalten wird, wenn das Abtasten genau in den Minima und Maxima erfolgt. Die Abtastfrequenz hierzu kann aus dem HDTV-Signal gewonnen werden. Dieses ist bereits getastet, so daß eine entsprechende Abtastrate auch für die Aufzeichnung verwendet werden kann. Auch die Phase kann, in einer üblichen Weise, aus dem HDTV-Signal gewonnen werden. Wie verfahren werden kann, wird im folgenden anhand von Fig.3 veranschaulicht. Fig.3 zeigt darüber hinaus weitere Details, die dazu dienen, die Prinzipschaltung gemäß Fig.1 für den praktischen Gebrauch funktionssicherer zu machen, und die weitere vorteilhafte Ausgestaltungen und Weiterbildungen der in Figur 1 dargestellten Prinzipschaltung zeigen.

In der Schaltung gemäß Fig. 3 verfügt die Aufzeichnungssignal-Verarbeitungseinrichtung 14 nicht nur über die zwei Abtastschaltungen 10.1 und 10.2 und die Frequenzmodulatoren M1 und M2, sondern noch über eine Eingangs-Synchronisiersignal-Auswerteschaltung18, eine Eingangs-Oszillatoranordnung 19 und zwei Pulserzeuger 20.1 und 20.2. Die Eingangs-Synchronisiersignal-Auswertschaltung 18 wertet unmittelbar das am Eingangsanschluß E eingegebene HDTV-Signal auf die Signalanteile aus, zu denen in vorgegebener Weise synchronisiert werden soll. Es kann sich hier um Signale aus dem Datenteil des HDTV-Signales handeln. Mit dem von der Eingangs-Synchronisiersignal-Auswertschaltung 18 gewonnen Synchronisiersignal wird die Eingangs-Oszillatoranordnung 19 synchronisiert, die beim Ausführungsbeispiel ein sinusförmiges Signal von 12MHz ausgibt. Der erste Pulserzeuger 20.1 gibt einen Puls bei jedem Anstieg des Sinussignals in positiver Richtung aus, während der Pulserzeuger 20.2 einen Puls bei jedem Übergang in negativer Richtung ausgibt. Dadurch sind die beiden Pulszüge um eine halbe Periode versetzt. Der erste Pulserzeuger gibt sein Ausgangssignal an die erste Abtast-Halteschaltung 10.1, während der zweite sein Signal an die zweite Abtast-Halteschaltung 10.2 liefert. Mit jedem Puls wird das eingangsseitige HDTV-Signal abgetastet. Das Abtasten kann sehr kurzzeitig erfolgen, sich jedoch auch über eine kleine Zeitspanne hinstrecken, die maximal einer halben Periode des Abtastsignals entsprechen kann. Wird über eine solche Zeitspanne abgetastet, wird ein integriertes Signal als Ausgangssignal ausgegeben.

Da beim Abtasten des HDTV-Signales Oberwellen entstehen, werden die von den Abtast-Halteschaltungen 10.1 und 10.2 ausgegebenen Signale nicht unmittelbar an die Modulatoreinheit und dann weiter an die Schreib-Leseköpfe 11.1 und 11.2 geliefert, sondern in jedem der beiden Signalwege ist jeweils ein 6-MHz-Tiefpaß 21.1 und 21.2 geschaltet. Diese Tiefpässe filtern die Oberwellen aus, so daß die beiden von ihnen ausgegebenen Aufzeichnungssignale AS1 uns AS2 zum störungsfreien Aufzeichnen dadurch geeignet sind, daß sie den Frequenzbereich dieser Aufzeichnungssignale auf eine Grenzfrequenz von 6MHz begrenzen.

Da auch in der Wiedergabesignalerzeugungseinrichtung 17 durch das Abtasten mit Hilfe des Umschalters 13 Oberwellen entstehen, wird das bei der Abtastung erzeugte Ausgangssignal über einen 12-MHz-Tiefpaß 22 an den Ausgangsanschluß A gegeben. Das so wiedergewonnene HDTV-Signal mit 12-MHz-Frequenzgrenze wird zusätzlich auf eine Ausgangs-Synchronisier-Auswerteschaltung 23 geführt.

Das von der Ausgangs-Synchronisiersignal-Auswertschaltung 23 ausgegebene Synchronisiersignal wird auf eine Ausgangs-Oszillatoranordnung 24 gegeben, die die Wiedergabe-Abtasteinrichtung 13 synchron ansteuert. Die Wiedergabe-Abtasteinrichtung ist in Figur 3 als mechanischer Umschalter dargestellt, jedoch wird hierfür tatsächlich ein elektronischer Umschalter verwendet.

Die Eingangs- sowie auch die Ausgangs-Synchronisiersignal-Auswertschaltung kann darüber hinaus eine Anlaufschaltung enthalten. Die Anlaufschaltung hat den für solche Schaltungen üblichen Zweck, den Synchronisiervorgang beim Start der Einrichtung zu beschleunigen.

Die Ausführungsbeispiele beziehen sich auf das Aufzeichnen und Wiedergeben eines HDTV-Signales mit 12MHz Grenzfrequenz mit einer Aufzeichnungs-/Wiedergabeeinrichtung 15, 16 mit einer 6-MHz-Grenzfrequenz. Es gilt aber allgemein, daß mit dem betriebenen Aufbau eines Videorecorders Signale aufzeichen- und wiedergebbar sind, deren Frequenzgrenze doppelt so hoch liegt wie die Grenzfrequenz einer jeweils verwendeten Aufzeichnungs-/Weidergabeeinrichtung.

**Patentansprüche**

1. Videorecorder mit verdoppelter Aufzeichnungsbandbreite, insbesondere zum Aufzeichnen und Wiedergeben von HDTV-Signalen, mit
   - einer Aufzeichnungs-Verarbeitungseinrichtung (14) zum Aufteilen der aufzuzeichnenden und in einer Bandbreite mit einer bestimmten oberen Übertragungsgrenzfrequenz zu übertragenden Videosignale in ein erstes und ein zweites Aufzeichnungssignal (AS1, AS2) einer Bandbreite mit jeweils mindestens der halben genannten Übertragungsgrenzfrequenz,
   - einer Aufzeichnungseinrichtung (15) zum Aufzeichnen der zwei Aufzeichnungssignale in zwei benachbarten Spuren auf einem Magnetband (12) mittels zweier eng benachbarter Schreibköpfe (11.1, 11.2),
   - einer Wiedergabeeinrichtung (16) zum Lesen der zwei in jeweils benachbarten Spuren aufgezeichneten Aufzeichnungssignale mittels zweier eng benachbarter Leseköpfe (11.1, 11.2) und zum Ausgeben der gelesenen Aufzeichnungssignale als Lesesignale (LS1, LS2)
   - und einer Wiedergabesignal-Erzeugungseinrichtung (17) zum Ausgeben eines aus den beiden Lesesignalen gebildeten Wiedergabesignals der genannten Übertragungsgrenzfrequenz,
   **dadurch gekennzeichnet,**
   - daß die Aufzeichnungssignal-Verarbeitungseinrichtung (14) folgende Funktionsmittel aufweist:
   -- eine erste Abtasteinrichtung (10.1) zum Abtasten des aufzuzeichnenden Signals mit Abtastpulsen einer ersten Abtastfrequenz, die wenigstens gleich der genannten Übertragungsgrenzfrequenz ist, und zum Ausgeben des bei der Abtastung erzeugten Ausgangssignales als erstes Aufzeichnungssignal (AS1),
   -- und eine zweite Abtasteinrichtung (10.2) zum Abtasten des aufzuzeichnenden Signals mit Abtastpulsen, die gegenüber denen in der ersten Abtasteinrichtung um eine halbe Periode verschoben sind und deren Abtastfrequenz gleich der ersten Abtastfrequenz ist, und zum Ausgeben des bei der Abtastung erzeugten Ausgangssignales als zweites Aufzeichnungssignal (AS2),
   - und daß die Wiedergabesignal-Erzeugungseinrichtung (17) eine Wiedergabe-Abtasteinrichtung (13) aufweist zum abwechselnd aufeinanderfolgenden Abtasten der beiden Lesesignale (LS1, LS2) mit Abtastpulsen, deren Abtastpulsfolge gleich dem doppelten Betrag der ersten Abtastfrequenz ist, und zum Ausgeben der bei der Abtastung erzeugten Ausgangssignale als Wiedergabesignal.

2. Videorecorder nach Anspruch 1, gekennzeichnet
   - durch eine Eingangs-Synchronisiersignal-Auswertschaltung (18) zum Auswerten eines vorgegebenen Synchronisiersignals im aufzuzeichnenden Videosignal und zum Synchronisieren der eingangsseitigen Abtastpulse mit dem Synchronisiersignal,
   - und durch eine Ausgangs-Synchronisiersignal-Auswertschaltung (23) zum Auswerten des in den Lesesignalen (LS1, LS2) beziehungsweise dem Wiedergabesignal enthaltenen Synchronisiersignals und zum Synchronisieren der wiedergabeseitigen Abtastpulse mit dem Synchronisiersignal.

3. Videorecorder nach Anspruch 1 oder 2, **dadurch gekennzeichnet**, daß die Wiedergabe-Abtasteinrichtung (13) ein von den wiedergabeseitigen Abtastpulsen gesteuerter elektronischer Umschalter ist.

4. Videorecorder nach einem der vorhergehenden Ansprüche, **dadurch gekennzeichnet**, daß die Abtasteinrichtungen (10.1, 10.2, 13) ausgangsseitig einen Tiefpass mit einer Grenzfrequenz enthalten, die etwa gleich der halben Abtastfrequenz der zugehörigen Abtasteinrichtung ist.

F i g . 1

12 MHz
HDTV-Signal   E

12 MHz

12 MHz        12 MHz
              1. S/H    6 MHz    M1
                        AS1
              10.1

              10.2
              2. S/H    6 MHz    M2
                        AS2
              12 MHz
              1/2 Periode
              phasenver-
              schoben

14

11.1
11.2
12

DM1

DM2

13
12 MHz
HDTV-Signal   A

15        16        17

F i g . 2

24 MHZ - Abtastung für
12 MHz HDTV-Signal

12 MHz HDTV-Signal

1. 12 MHz - Abtastung
(für 1. Aufzeichnungssignal
mit 6 MHz Grenzgrequenz)

2. 12 MHz - Abtastung
(für 2. Aufzeichnungssignal
mit 6 MHz Grenzfrequenz)

EP 0 456 905 A2

Fig. 3

8